(19) Europäisches Patentamt
European Patent Office
Office européen des brevets

(11) Publication number: 0 437 886 A2

# (12) EUROPEAN PATENT APPLICATION

(21) Application number: 90203422.2

(22) Date of filing: 18.12.90

(51) Int. Cl.5: C08L 27/06, C08K 13/02, //(C08K13/02,3:24,5:00)

(30) Priority: 19.01.90 IT 1911590

(43) Date of publication of application: 24.07.91 Bulletin 91/30

(84) Designated Contracting States: AT BE CH DE DK ES FR GB GR LI LU NL SE

(71) Applicant: EUROPEAN VINYLS CORPORATION (ITALIA) S.p.A.
Via Ruggero Settimo 55
I-90139 Palermo(IT)

(72) Inventor: Prando Primo
Via Duca d'Aosta 11
I-30175 Mestre(IT)

(74) Representative: Roggero, Sergio et al
Ing. Barzanò & Zanardo Milano S.p.A. Via Borgonuovo 10
I-20121 Milano(IT)

## (54) Stabilizer composition for polymers of vinyl chloride and polymeric compositions containing such compositions.

(57) Disclosed is a stabilizer composition for polymers of vinyl chloride, which comprises a zinc salt, at least one salt of an alkali metal or alkali-earth metal and a plurality of organic co-stabilizers selected from at least four of the following: organic phosphites, high-steric-hindrance phenolic derivatives, beta-diketones, heterocyclic compounds containing nitrogen, polyvinyl alcohols, polyols and U. V. absorbers.

EP 0 437 886 A2

## "STABILIZER COMPOSITION FOR POLYMERS OF VINYL CHLORIDE AND POLYMERIC COMPOSITIONS CONTAINING SUCH COMPOSITION"

The present invention relates to a stabilizer composition for polymers of vinyl chloride, which comprises a mixture of metal salts of organic acids and a plurality of organic compounds customarily used as stabilizers for polymeric materials.

The present invention relates furthermore to polymeric compositions based on polymers of vinyl chloride, endowed with good physical-mechanical properties, and characterized by a high level of stabilization to heat and to the atmospheric agents, which contain the above said plurality of stabilizer agents.

Poly(vinyl chloride) is a thermoplastic polymer which represents, together with polyethylene and polystyrene, one of the most interesting products from an industrial viewpoint. The great commercial development of such a product is due to its excellent characteristics, to its high versatility of fabrication, processing and use, as well as to its relatively low cost.

Thus, poly(vinyl chloride) is suitable for nearly all of the processing techniques typical for thermoplastic materials and, in particular for the extrusion, injection-moulding, compression-moulding, blow-moulding, high-temperature-lamination, thermoforming processes, yielding a large variety of either compact or cellular products. Thanks to its polar character, poly(vinyl chloride) not pose adhesion and colouring problems; and furthemore, it can be easily welded and bonded with several adhesives.

However, the product is unstable at its processing temperatures, and tends to decompose developing hydrochloric acid, turning into a yellowish or brown colour, and undergoing a considerable reduction in its physical-mechanical characteristics.

The development of hydrochloric acid is supposed to be initiated by the weakening of some bonds in the polymeric chain, like, for instance, the sites of allylic chlorine could be; the reaction undergoes a considerable acceleration when the first molecules of hydrochloric acid are formed, until a conjugated polyene structure is formed. More particularly, the degradation modifications suffered by a not stabilized poly-(vinyl chloride) can be caused by heat, light, oxygen, or any combinations of these factors.

A possible mechanism for this phenomenon could be represented by the following scheme, in which the formula (I) represents the backbone of the polymer, as it results from the polymerization process.

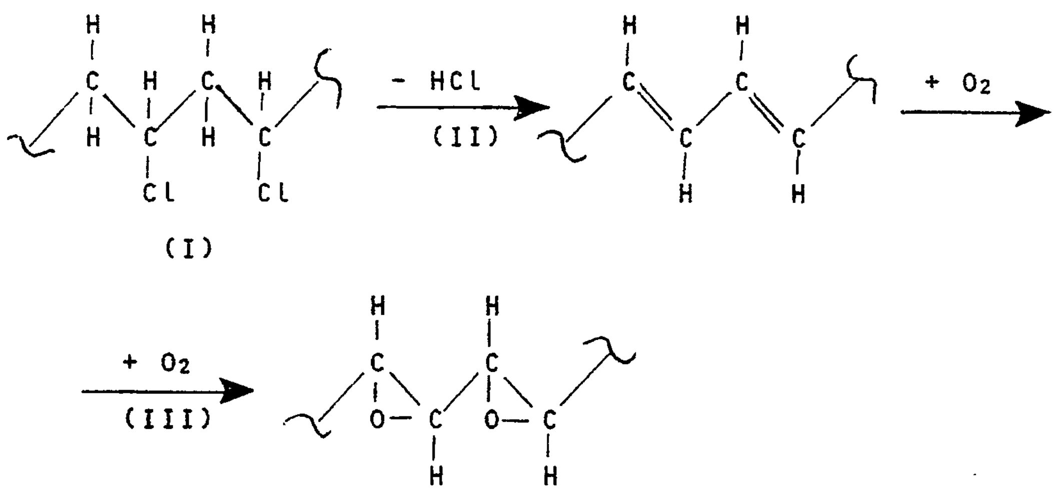

(I)

As said, the incipient decay phenomenon, when the product is exposed to heat or to light, is represented by the formation of hydrochloric acid. It leads to a polymeric structure containing double bonds (II). In its turn, the action of oxygen results in the appearance of a structure of (III) type, which is characterized by a general decay of the physical properties, usually resulting in the brittlening and in changes in the external appearance of the product.

Also the appearance of the product changes: an increase in temperature may cause a considerable change in colour, and the effect of light may result in a discoloration of non-plasticized products (the colour of which may either turn into whitish and/or become darker), and in the formation of stains in case of plasticized products.

It is evident from the above that, inasmuch as poly(vinyl chloride) has to be protected from the destabilizing effects of light and heat, as well as from the subsequent oxidation of the double bonds

possibly formed during the first degradation step, an ideal stabilizer should be capable of simultaneously securing the heat and light stabilization, and an antioxidant action.

Heretofore, no compounds have been capable of performing, alone, these three functions, and therefore it is usual in the practice to have resort to the use of combinations of two or more stabilizer agents, which often compose a casual mixture in which the protective effects of the several components add up but which, sometimes, is not exempt from mutually negative influences and which, prcisely due to the casual nature of the composition, not always can be reproduced in its optimal ratios.

Basically, the stabilizer agents for poly(vinyl chloride) can be classified into three large groups:

* metal salts;
* lead compounds;
* organometallic derivatives of tin.

With particular reference to the first group, it should be reminded here that in general these are metal salts of fatty acids, particularly used as mixtures (e.g.; Ca and Zn carboxylates (GB -1,460,221), Ba and Cd carboxylates, and so forth), and preferably containing heavy metals (such as, e.g. , Cd salts). These mixed systems are only used in the presence or organic co-stabilizers, among which such compounds as phenyl-dodecyl-phosphite (US-4, 159, 973), decyl-diphenyl-phosphite (published Japanese patent application 54/688853) , di-pentaerythritol (published Japanese patent application 53/12946) , N,N-diphenyl-thiourea (US-3,904,564) may be reminded.

Lead-based stabilizers are disclosed on the contrary, e.g., in U.K. patent 2,020,660 (lead oxide plus pentaerythritol), or in German patent application N. 2,613,249 (mixture of lead carboxylates). Tin-based stabilizers are defined on the contrary in US-4,085,077 (di-butyl-tin plus stearic acid), or in GB 1,576,162 (di-butyl-tin plus stearyl alcohol) or, finally, in US-4,193,913 (mono-octyl-tin plus calcium and zinc stearates).

As briefly mentioned above, the stabilizer formulations used heretofore suffer from the initially casual character of preparation which, once again, does not allow a constant reproducibility thereof or, at least, does not allow a constant reproducibility thereof on considering the several uses to which poly(vinyl chloride) may be destined.

Furthermore, the preferably used formulations contain, variously combined, at least one heavy-metal compound -- above all cadmium -- which is the cause of a large number of environmental problems.

Therefore, a purpose of the present invention is a novel stabilizer composition of polymers of vinyl chloride, constituted by a mixture of component, and characterized by a high synergism of behaviour relatively to the expected sum of contributions of the individual components. Such a composition is furthermore characterized by the presence of a number of constituents never observed before in the stabilizer composition known from the prior art and, an extremely surprising feature, by a great versatility of use (i.e., it can be added to the polymer independently from the presence or absence of other fillers, of the nature of the latter or of the use the same polymer is destined to). Furthermore, the definition of the composition according to the present invention is such that, although a large number of components is present, a constant and rigorous reproducibility thereof is possible as regards the amounts and the mutual ratios of the several individual components, regarded as the optimal ones for the expected uses.

A further object of the present invention is each polymeric composition based on polymers of vinyl chloride, stabilized by the presence of the above said formulation.

The stabilizer composition for polymers of vinyl chloride with improved effect as compared to the compositions known from the prior art, comprises hence

(A) a mixture of metal salts of organic acids, comprising a Zn salt and at least one salt of a second metal, selected from the group consisting of alkali metals and alkali-earth metals,

(B) a mixture of organic co-stabilizers containing at least four compounds selected from the group consisting of organic phosphites, high-steric-hindrance phenolic derivatives, beta-diketones, nitrogen-containing heterocyclic compounds, polyvinyl alcohols, polyols and possibly U.V. absorbers.

The carboxy acids preferably used for preparing the salts of the (A) component are stearic acid, lauric acid, benzoic acid and 2-ethyl-hexanoic acid. Of course, the acid is selected as a function of the physical state desired for the stabilizer composition.

As regards the organic co-stabilizer agents which form a part of said composition as the (B) component thereof, among those which can be used with particularly advantageous results, the following may be cited:

Organic Phosphites:

Di-isooctyl-phenyl-phosphite, decyl-diphenyl-phosphite, tetra-($C_{12}$-$C_{15}$)-alkyl-bisphenol-A diphosphite, tri-phenyl-phosphite, tris-(nonyl-phenyl)-phosphite, 2-n-butoxyethyl-phosphite;

Phenols:

Octadecyl [3-(3, 5-di-tert.-butyl-4-hydroxyphenyl)-propionate], 4,4'-thio-bis-(6-tert.-butyl-3-methyl-phenol);2,2'-methylene-bis-[4-methyl-6-( -methyl-cyclohexyl)-phenol], 1 ,1,5,5-tetra-(5-tert.-butyl-4-hydroxy-2-methyl-phenyl)-pentane;

Diketones:

Benzoyl-acetone, dibenzoyl-methane, acetyl-benzoyl-methane, stearoyl-acetophenone, alpha-stearoyl-butyrolactone, alpha-benzoyl-butyrolactone and beta-thiobenzoyl acetate;

Nitrogenous Heterocyclic Compound:

1,4-dihydropyridine, alpha-phenyl-indole, dihydro-1,4-dimethyl-2,6-dicarbododecyl-oxy-3,5-pyridine, triazoles;

Polyvinyl Alcohols:

Each product derived from the alcoholysis of poly-(vinyl acetate), independently from the specific degree of hydrolysis.

Polyols:

Trimethylol-propane, 2-ethyl-hexanol, mono-, di-, tri-pentaerythritol and esters thereof.

U.V. Absorbers:

2-(2'-hydroxyphenyl)-benzotriazoles, 2,4-bis-(2'-hydroxyphenyl)-6-alkyl-triazines, 2-hydroxy-benzophenones, 1,3-bis-(2'-hydroxy-benzoyl)-benzenes.

Of course, other additives can be present. Among them, plasticizers, lubricants, fillers, carbon black, asbestos, kaolin, fiberglass, pigments, optical brighteners, flame-retardants, antistatic products may be reminded.

Therefore, in the composition according to the present invention, the presence is constant of a zinc carboxylate, while the nature of the second salt may change, in the formation of the (A) component of said composition. Furthermore, the definition of the organic co-stabilizer agent is not binding provided that, according to the above seen meaning of the (B) constituent, at least four of said additives are always simultaneously present. The so resulting composition makes it hence possible the heavy metals -- which, as said, are preferably used in still commercially appreciated stabilizers for poly(vinyl chloride) -- to be completely replaced.

Said composition makes it possible any problems of toxicologic kind to be prevented, a result which is not possible, e.g., in the case of the stabilizer compositions based on cadmium compounds without those phenomena of decay in polymer properties being observed which occurred always as the result of the past attempts aiming at replacing the above said heavy metals.

In the stabilizer formulation according to the present invention the amount of each one of the various constituents can be expressed as a ratio to the amount of the salt of zinc. Therefore, relatively to the latter, the other components can be present in the following ratios by weight:

* second salt, from 0.005 to 3,
* organic phosphite, from 0 to 1,
* phenols, from 0 to 1,
* beta-diketones, from 0 to 1,
* nitrogenous heterocyclic compounds, from 0 to 1,
* polyvinylalcohol, from 0 to 1.5,
* polyols, from 0 to 1.5,
* U.V. absorber, from 0 to 0.5,

of course with the proviso that at least four from the several constituents different from the metal salt have a weight ratio to the salt of zinc, which is different from zero.

As briefly mentioned hereinabove, within the purposes of the present invention also the polymeric compositions fall, which are based on polymers of vinyl chloride and contain a stabilizer formulation which

can be defined according to as discussed hereinabove.

Therefore, a second object of the present invention is a polymeric composition based on polymers of vinyl chloride containing, per each 100 parts by weight of polymeric material :

* from 0 to 100 parts by weight of phthalic, adipic, sebacic, trimellitic, pyromellitic, isocyanurate, azelaic and still other plasticizers, according to the physical-mechanical characteristics to be supplied to the same composition or to the fabricated articles such a composition is destined to;
* from 0.1 to 4 parts by weight of stabilizers falling within the scope of the definition supplied for the (A) component of the stabilizer composition;
* from 0.5 to 4 parts by weight of the organic co-stabilizers falling within the scope of the definition of the stabilizer composition, of course within the terms and in the amounts, relatively to the preceding components, as specified within the scope of said definition, as above given;
* from 0 to 0.5 parts by weight of U.V. absorbers,
* from 0 to 2 parts by weight of lubricants constituted by stearic acids, stearates, natural waxes, polyolefinic waxes, paraffinic waxes, polyamidic waxes, esters of montanic acid and the like;
* from 0 to 10 parts by weight of $TiO_2$;
* from 0 to 100 parts by weight of mineral fillers such as e.g. calcium carbonate, magnesium carbonate, alkali-metal and alkali-earth metal silicates, alumina, and the like.

The polymers of vinyl chloride to be used in the compositions according to the present invention can be selected from among a wide range of polymeric materials.

Particularly advantageous results are obtained with vinyl chloride homopolymers. The above mentioned stabilizer compositions are anyway also effective in the stabilization of vinyl chloride with other monomers, such as, e.g., vinyl acetate, post-chlorinated polymers and copolymers of vinyl chloride, high-crystallinity polymers of vinyl chloride obtained by polymerization of the monomer carried out at a low temperature and/or in the presence of particular catalytic systems; in the case of post-chlorinated polymers and of high-crystallinity polymers, these polymeric materials can be used as mixtures with other polymeric materials such as, e.g., low- and high-molecular weight acrylic polymers, capable of improving the processability of the vinyl-chloride-containing polymeric materials, or the mechanical characteristics of such materials.

Consequently, the stabilization can be performed of blends of PVC with polyacrylates, ABS, CPE, EVA, or PVC/CPE grafted copolymers, PVC polyacrilates, PVC/EVA, PVC/ABS, or mechanical mixtures of PVC with the above said reinforcer agents.

The technique of preparation -- i.e., the modalities of addition, mixing and treatment of the various components -- of the compositions according to the present invention, as well as the equipment to be used for that purpose, are those which are traditionally used, well-known to all those skilled in the art.

Such compositions are now illustrated in greater detail by the following examples which anyway should not be understood as being limitative of the aspects and of the purposes of the instant invention.

Example N. 1

The stabilizer composition was prepared, which is constituted by Zn octanoate, Ca laurate, stearyl-benzoyl-methane, di-hydro-pyridine laurate, IRGANOX 1010, polyvinyl alcohol (ALCOTEX 72.5), in the respective amounts (as referred to 100 parts of resin) of 0.4, 1 .5, 0.2, 0.2, 0.4, 0.4.

The so obtained mixture was added by conventional techniques to a PVC obtained by suspension polymerization, and a thermal stability of 25 minutes was obtained (Congo-red test at 200° C).

Example 2

A stabilizer composition was prepared by starting from Zn octanoate, Ca stearate, stearoyl-benzoyl-methane, di-isooctyl-phenyl-phosphite, IRGANOX 1010, trimethylol-propane and polyvinyl alcohol in the amounts (still referred to 100 parts of resin) respectively of 0.4, 1.5, 0.5, 0.3, 0.5, 0.4, 0.5.

The stabilized resin was a PVC produced by suspension polymerization and its observed stability was of 26 minutes (Congo-red test at 200° C).

Example 3

A stabilizer formulation having the following composition (expressed as parts referred to 100 parts of resin):

| | |
|---|---|
| * Zn stearate | 0.8 |
| * Ca stearate | 1.5 |
| * Stearyl-benzoyl-methane | 0.5 |
| * IRGANOX 1076 | 0.2 |
| * trimethylol-propane | 0.8 |
| * polyvinyl alcohol | 0.4 |

was prepared according to conventional techniques.

The end product showed a Congo-red stability at 200 ° C, of 26 minutes.

## Claims

1. Stabilizer composition for polymers of vinyl chloride comprising
   (A) a mixture of metal salts of organic acids, comprising a Zn salt and at least one salt of an alkali metal and alkali-earth metal,
   (B) a mixture of organic co-stabilizers containing at least four compounds selected from the group consisting of organic phosphites, high-steric-hindrance phenolic derivatives, beta-diketones, nitrogen-containing cyclic organic compounds, polyvinyl alcohols, polyols and possibly U.V. absorbers.

2. Stabilizer composition for polymers of vinyl chloride according to the preceding claim, in which the various constituents are present in the following ratios by weight relatively to the salt of zinc:
   * second salt, from 0.005 to 3,
   * organic phosphite, from 0 to 1,
   * phenol, from 0 to 1,
   * beta-diketone, from 0 to 1,
   * nitrogenous heterocyclic compound from 0 to 1,
   * polyvinylalcohol, from 0 to 1.5,
   * polyol, from 0 to 1.5,
   * U.V. absorber, from 0 to 0.5, with the proviso that at least four from the several constituents different from the metal salt have a weight ratio to the salt of zinc, which is different from zero.

3. Stabilizer composition for polymers of vinyl chloride according to the preceding claim, in which the organic phosphite is selected from the group consisting of di-isooctyl-phenyl-phosphite, decyl-diphenyl-phosphite,tetra-($C_{12}$-$C_{15}$)-alkyl-bisphenol-A diphosphite, tri-phenyl-phosphite, tris-(nonyl-phenyl)-phosphite, 2-n-butoxyethyl-phosphite.

4. Stabilizer composition for polymers of vinyl chloride according to claim 2, in which the phenol is selected from the group consisting of octadecyl [3-(3,5-di-tert.-butyl-4-hydroxyphenyl)-propionate], 4,4'-thio-bis-(6-tert.-butyl-3-methyl-phenol); 2,2'-methylene-bis-[4-methyl-6-( -methyl-cyclohexyl)-phenol], 1,1,5,5-tetra-(5-tert.-butyl-4-hydroxy-2-methyl-phenyl)-pentane.

5. Stabilizer composition for polymers of vinyl chloride according to claim 2, in which the beta-diketone is selected from the group consisting of benzoyl-acetone, dibenzoyl-methane, acetyl-benzoyl-methane, stearoyl-acetophenone, alpha-stearoyl-butyrolactone, alpha-benzoyl-butyrolactone and beta-thiobenzoyl acetate.

6. Stabilizer composition for polymers of vinyl chloride according to claim 2, in which the nitrogenous heterocyclic compound is selected from the group consisting of 1,4-dihydropyridine, alpha-phenyl-indole, dihydro-1,4-dimethyl-2,6-dicarbododecyl-oxy-3,5-pyridine, triazoles,

7. Stabilizer composition for polymers of vinyl chloride according to claim 2, in which the polyvinyl alcohol is selected from the group consisting of each product derived from the alcoholysis of poly-(vinyl acetate), independently from the specific degree of hydrolysis.

8. Stabilizer composition for polymers of vinyl chloride according to claim 2, in which the polyol is selected from the group consisting of trimethylol-propane,2-ethyl-hexanol, mono-, di-, tri-pentaerythritol and esters thereof.

9. Polymeric composition based on polymers of vinyl chloride containing, per each 100 parts by weight of polymeric material:
   * from 0 to 100 parts of at least one plasticizer,
   * from 0.1 to 4 parts of stabilizers as defined for the (A) component according to claim 1,
   * from 0.5 to 4 parts of the co-stabilizer mixture as defined for the (B) component of claim 1,
   * from 0 to 0.5 parts of U. V. absorbers,
   * from 0 to 2 parts of lubricant,
   * from 0 to 10 parts of $TiO_2$
   * from 0 to 100 parts of mineral fillers.